# EUROPEAN PATENT APPLICATION

(11) **EP 3 428 585 A1**
(43) Date of publication of application: **16.01.2019**
(21) Application number: 18166155.4
(22) Date of filing: 06.04.2018
(51) Int. Cl.: G01F 23/26, B29C 64/124, B29C 64/255, B29C 64/393, G01F 25/00

(54) **THREE DIMENSIONAL PRINTER AND LIQUID LEVEL SENSING METHOD**

(30) Priority: 14.07.2017 CN 201710573504
(71) Applicant: XYZprinting, Inc., New Taipei City 22201 (TW); Kinpo Electronics, Inc., New Taipei City 22201 (TW)
(72) Inventor: DING, Ming-Hsiung, 22201 New Taipei City (TW); KUO, Tsung-Hua, 22201 New Taipei City (TW); GIR, Chung-Yen, 22201 New Taipei City (TW)
(74) Representative: 2K Patentanwälte Blasberg Kewitz & Reichel

(57) **Abstract**

A 3D printer and a liquid level sensing method are provided. The 3D printer includes a tank and at least one capacitive sensing module for sensing a liquid level of the liquid forming material in the tank. The at least one capacitive sensing module includes a first electrode pair disposed beside the tank, and the first electrode pair is used for producing an electric field, where the electric field passes through the liquid forming material.

## Description

### BACKGROUND

### Technical Field

The disclosure relates to a three-dimensional (3D) printer and a liquid level sensing method of a 3D printer.

### Description of Related Art

In recent years, three-dimensional (3D) printers have been widely used in various fields, and various 3D printing techniques are quickly developed to enter an era that everything can be printed. Photopolymer is a liquid forming material used by most of the 3D printers, and techniques such as stereolithography apparatus (SLA), digital light processing (DLP) and continuous liquid interface production (CLIP) all take the photopolymer as a printing material. However, the photopolymer has a high price, so that the amount of usage becomes a major concern for users. If the amount of the material provided for the printing is more than the amount of the material needed for final curing, it will cause a waste of the cost; and if the amount of the material provided for the printing is less than the amount of the material needed for the final curing, the photopolymer needs to be added in the middle of the printing process, which increases a risk of printing failure. Moreover, the photopolymer is liable to be influenced by the environment, and is generally slowly cured to cause out of use as time passes.

Therefore, the usage amount of the photopolymer serving as a major consuming material is required to be accurately controlled to serve as an improvement means for optimizing a supply amount, stability of product yield and the cost, etc.

### SUMMARY

The disclosure is directed to a three-dimensional (3D) printer, in which a capacitive sensing module is disposed outside a tank, and an electric field produced by the capacitive sensing module passes through a liquid forming material in the tank, so as to sense a variation of the liquid forming material in the tank.

An embodiment of the disclosure provides a 3D printer including a tank and at least one capacitive sensing module. The tank is configured to contain a liquid forming material. The capacitive sensing module is configured to sense a liquid level of the liquid forming material in the tank. The at least one capacitive sensing module includes a first electrode pair disposed beside the tank, and the first electrode pair is used for producing an electric field, and the electric field passes through the liquid forming material.

An embodiment of the disclosure provides a liquid level sensing method, which is adapted to a 3D printer, where the 3D printer includes a tank, a plurality of capacitive sensing modules and a control module. The tank is configured to contain a liquid forming material. The capacitive sensing modules are disposed around the tank. The control module is electrically connected to each of the capacitive sensing modules. The liquid level sensing method includes: obtaining reading values of a plurality of the capacitive sensing modules by using the control module; determining whether the reading value of each of the capacitive sensing modules is smaller than a reading value of the liquid forming material at a low liquid level of the tank, so as to determine a liquid level of the liquid forming material in the tank; and performing 3D printing based on the determination result or sending a signal to request for filling the liquid forming material in the tank.

### BRIEF DESCRIPTION OF THE DRAWINGS

FIG. 1 is a schematic diagram illustrating assembling of a 3D printer.
FIG. 2 is a partial enlarged view of a 3D printer.
FIG. 3A and FIG. 3B are side views of 3D printers according to different embodiments.
FIG. 4 is a flowchart illustrating a liquid level sensing method executed by a 3D printer.
FIG. 5A and FIG. 5B are respectively top views of 3D printers according to different embodiments.
FIG. 5C is a schematic diagram of a state of a 3D printer.
FIG. 6A to FIG. 6C are partial enlarged views of 3D printers according to different embodiments.
FIG. 7 is a schematic diagram of a 3D printer according to another embodiment.

### DESCRIPTION OF EMBODIMENTS

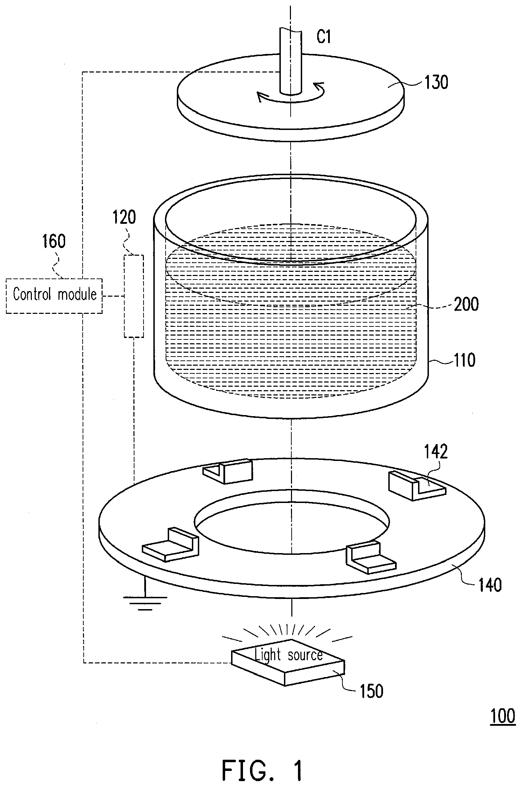

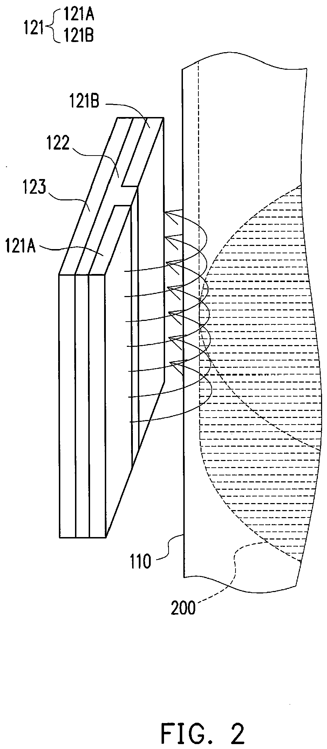

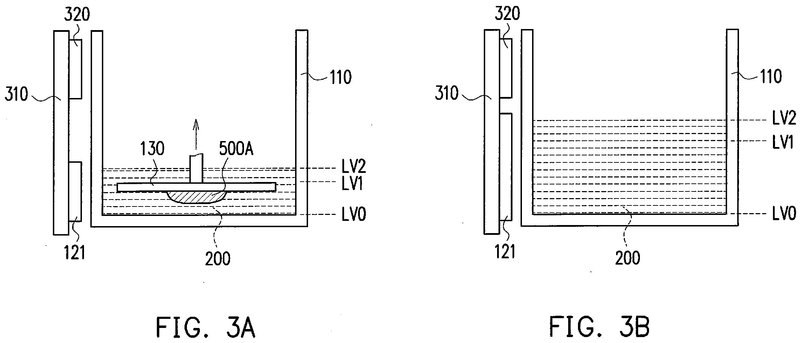

FIG. 1 is a schematic diagram illustrating assembling of a 3D printer. FIG. 2 is a partial enlarged view of a 3D printer. FIG. 3A and FIG. 3B are side views of 3D printers according to different embodiments. Referring to FIG. 1 and FIG. 2, in the present embodiment, the 3D printer 100 includes a tank 110, a capacitive sensing module 120, a forming platform 130, a control module 160, a light source 150 and a base 140. The 3D printer 100 is a pull-up stereolithography (SL) printer, the tank 110 is used for containing a liquid forming material 200, and by converting design data of a 3D model constructed through software such as computer-aided design (CAD) into a plurality of continuously stacked thin (quasi two-dimensional) cross-section layers, the control module 160 may drive the forming platform 130 to immerse in the liquid forming material 200, and drive the light source 150 to provide light to irradiate the liquid forming material 200 according to information of the cross-section layer, so as to cure the liquid forming material 200 to form the correct cross-section layer on the forming platform 130. Then, as the forming platform 130 is gradually moved up along an axis C1, the liquid forming material 200 may form a 3D object 500A under a state of curing and stacking layer-by-layer (shown in FIG. 3A).

In the present embodiment, the forming platform 130 and the tank 110 may all be rotated about the axis C1, such that an effect of rotating relative to the axis C1 (regardless of rotation of only the forming platform 130, only the tank 110 or both of the forming platform 130 and the tank 110) is achieved, which improves an applicable range of the 3D object 500A on the forming platform 130 in the 3D printing process, and achieves an effect of separating the cross-section layer or the 3D object 500A from a bottom of the tank 110 through the relative rotation. In an embodiment, only the tank 110 is rotated, and the forming platform 130 only performs an operation of moving up and down.

As described above, in order to accurately learn an amount of the liquid forming material 200 in the tank 110, in the 3D printer 100 of the present embodiment, the capacitive sensing module 120 is disposed beside the tank 110 to sense a liquid level of liquid forming material 200 in the tank 110, such that the control module 160 or a user may learn or determine whether the liquid forming material 200 is enough before the 3D printing is performed.

In detail, as shown in FIG. 2, the capacitive sensing module 120 includes a first electrode pair 121, an insulator 122 and a shielding member 123, where the first electrode pair 121 includes a sensing electrode 121A and a ground electrode 121B, the sensing electrode 121A and the ground electrode 121B are located at a same side of the insulator 122 and face the liquid forming material 200, and the insulator 122 electrically isolates the sensing electrode 121A and the ground electrode 121B. The shielding member 123 is disposed on another side of the insulator 122 to back-face the first electrode pair 121, where the shielding member 123 is used for shielding signal interference of the ambient environment on the first electrode pair 121, and a material thereof may be metal, and the insulator 122 electrically isolates the shielding member 123 and the first electrode pair 121. In this way, by supplying electric power to the first electrode pair 121, an electric field is produced between the sensing electrode 121A and the ground electrode 121B, and the electric field passes through the liquid forming material 200 of the tank 110, as shown by arrows in FIG. 2.

As everyone knows, since dielectric constants of substances are different, the electric field in the capacitor structure is influenced as the electric field passes through different medium. Therefore, when the amount of the liquid forming material 200 is changed, a capacitance of the first electrode pair 121 is accordingly changed. Namely, the variation of a liquid level of the liquid forming material 200 in the tank 110 represents a variation of the dielectric substance that influences the capacitance, and the variation of the liquid level causes a variation of a reading value of the capacitance.

Referring to FIG. 3A, in the present embodiment, the capacitance sensing module further includes a second electrode pair 320, where the second electrode pair 320 and the first electrode pair 121 are all disposed on a substrate 310 and are electrically connected to the control module 160. In this case, a composition structure of the second electrode pair 320 is the same with that of the first electrode pair 121 (as shown in FIG. 2), and the substrate 310 is similar to the composition of the insulator 122 and the shielding member 123 of FIG. 2, so that detail thereof is not repeated. A difference between the two electrode pairs is that the second electrode pair 320 of the present embodiment is located beside the tank 110 and located above a predetermined liquid level of the liquid forming material 200. In other words, when the liquid level of the liquid forming material 200 is controlled to the predetermined liquid level or within a certain error range thereof, the electric field produced by the second electrode pair 320 does not pass through the liquid forming material 200 in the tank 110. Namely, the second electrode pair 320 is used for sensing a capacitance of the ambient environment, so as to serve as a sensing reference of the first electrode pair 121.

It should be noted that as shown in FIG. 3A, the change of the liquid level of the liquid forming material 200 in the tank 110 substantially includes an empty liquid level LV0, a low liquid level LV1 and a full liquid level LV2, and in an embodiment, the first electrode pair 121 substantially faces the liquid forming material 200 to simultaneously cover the range of the aforementioned liquid levels. In other words, when the liquid forming material 200 in the tank 110 is defined to have the aforementioned liquid levels, it represents that the capacitive sensing module 120 has learned the capacitances corresponding to the different liquid levels. Therefore, when the liquid level is changed, a currently sensed capacitance may be compared with the capacitance corresponding to the aforementioned liquid level to determine a current liquid level of the liquid forming material 200.

FIG. 3B is a side view of a 3D printer according to another embodiment of the disclosure. Referring to FIG. 3B, it is known that a size of the first electrode pair 121 may be adjusted according to an actual utilization, so as to cope with a liquid level required to be achieved by the liquid forming material 200 in the tank 110.

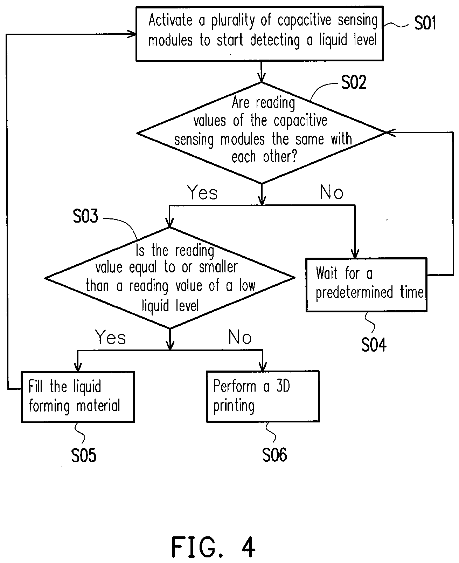

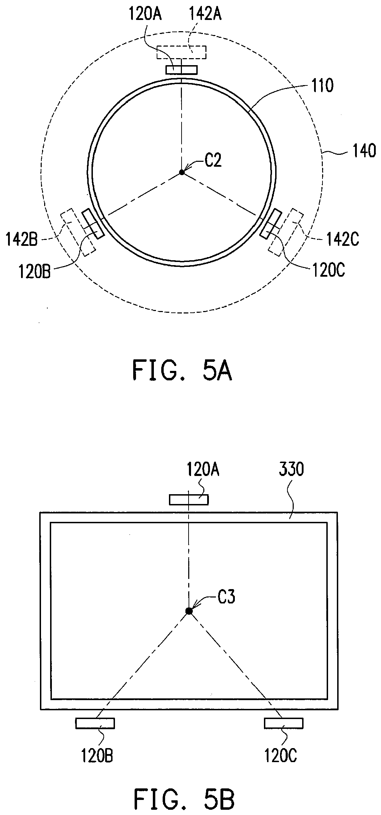

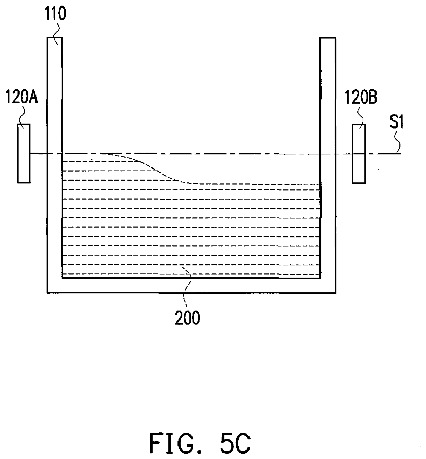

FIG. 4 is a flowchart illustrating a liquid level sensing method executed by the 3D printer. FIG. 5A and FIG. 5B are respectively top views of the 3D printers according to different embodiments. FIG. 5C is a schematic diagram of a state of the 3D printer. Referring to FIG. 4 and FIG. 5A, in the present embodiment, the 3D printer includes a plurality of capacitive sensing modules 120A, 120B and 120C respectively surrounding the tank 110 in an equal angle configuration, i.e. relative to the axis C2, the capacitive sensing modules 120A, 120B and 120C present a configuration mode of a circumferential angle of 120 degrees. Operation timings of the capacitive sensing modules are described with reference of FIG. 4. Generally, before the 3D printing is performed, a step S01 is executed to start the capacitive sensing modules 120A, 120B and 120C to sense a status of the liquid forming material 200 in the tank 110. Then, in step S02, it is determined whether a reading value of each of the capacitive sensing modules 120A, 120B and 120C is the same, and such step refers to a flatness of the liquid forming material 200 in the tank 110. Namely, since the liquid forming material 200 is substantially a photopolymer having a high viscosity, mobility thereof is poor, so that the step S02 is used for determining whether the liquid forming material 200 presents a stable state. Therefore, when the reading values of the capacitive sensing modules 120A, 120B and 120C are different, it represents that the liquid forming material 200 is still in a shaking state, as shown in FIG. 5C. In this case, it is required to execute a step S04, by which a predetermined time is required to wait for stableness of the liquid forming material 200. After the reading values of the capacitive sensing modules 120A, 120B and 120C are the same, a step S03 is executed to determine whether the reading values of the capacitive sensing modules 120A, 120B and 120C are equal to or smaller than a reading value of the low liquid level LV1, and if not, it represents that the liquid forming material 200 in the tank 110 is sufficient to execute the 3D printing of the step S06. If yes, a step S05 is executed, by which the liquid forming material 200 is filled in the tank 110 for supplement, and a supplementary amount thereof may be determined according to the liquid level sensed in the step S03. In an embodiment, the supplement of the liquid forming material 200 may be controlled by an automatic control system according to the liquid level sensed in the step S03 to implement automatic supplement. In another embodiment, the liquid level sensed in the step S03 may be converted to directly notify the required supplementary amount of the liquid forming material 200 to the user. After the supplement is completed, the step S01 to the step S03 are again executed for further confirmation. It should be noted that whether the reading values are the same still requires considering a sensing accuracy of the capacitive sensing module, and a possible tolerance error is allowed. Moreover, as shown in FIG. 5C (only the capacitive sensing modules 120A and 120B are shown), the capacitive sensing modules 120A, 120B and 120C are substantially located on a plane S1 of a same height, so as to determine the flatness of the liquid forming material 200.

Referring to FIG. 5B, different to the aforementioned embodiment, the tank 330 of the present embodiment presents a rectangle contour, so that the capacitive sensing modules 120A, 120B and 120C of the present embodiment are disposed relative to the axis C3 (center of the tank 330) in an equal distance configuration.

Moreover, in another embodiment, the step S03 of FIG. 4 is executed before the step S02 is executed, i.e. the step S03 is first executed to determine whether the liquid forming material 200 in the tank 110 is sufficient, and once it is determined that the liquid forming material 200 is required to be supplemented, the step S05 is executed, by which the unnecessary waiting time of the step S04 is omitted in case that the liquid forming material 200 is insufficient.

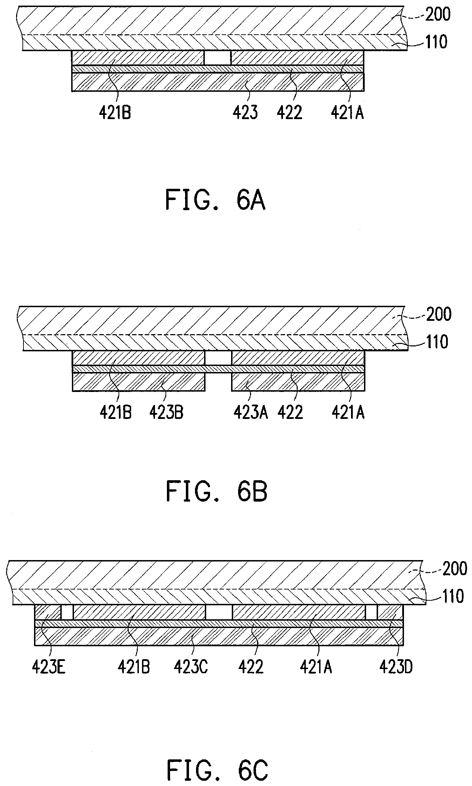

FIG. 6A to FIG. 6C are partial enlarged views of 3D printers according to different embodiments of the disclosure. Referring to FIG. 6A, in the present embodiment, a sensing electrode 421A and a ground electrode 421B are respectively disposed on a same side of an insulator 422, and the sensing electrode 421A and the ground electrode 421B are substantially attached to an outer wall of the tank 110, and a shielding member 423 is disposed on another side of the insulator 422 to back-face the sensing electrode 421A and the ground electrode 421B. Referring to FIG. 6B, different to the aforementioned embodiment, the 3D printer of the present embodiment includes two shielding members 423A, 423B, and the shielding member 423A corresponds to the sensing electrode 421A, and the shielding member 423B corresponds to the ground electrode 421B. Referring to FIG. 6C, the 3D printer of the present embodiment includes three shielding members 423C, 423D and 423E, where the shielding member 423C is similar to the aforementioned shielding member 423, and the shielding member 423D and the shielding member 423E are respectively located at two opposite sides of the sensing electrode 421A and the ground electrodes 421B to enclose the sensing electrode 421A and the ground electrodes 421B, so as to decrease the interference of the external environment to effectively decrease a noise. It should be noted that the capacitive sensing modules of the embodiments of FIG. 6A to FIG. 6C are simply attached to the outer wall of the tank 110, so that the capacitive sensing modules may be rotated or disassembled along with the tank 110, i.e. when the tank 110 is to be replaced, the capacitive sensing modules may be easily disassembled from the old tank and attached to the new tank. It should be noted that the capacitive sensing modules of the embodiments of FIG. 6A to FIG. 6C are also adapted to the embodiments of FIG. 1 to FIG. 5C, i.e. the capacitive sensing modules are kept a distance with the tank (i.e. disposed independent to the tank), and are not disassembled along with the replacement of the tank.

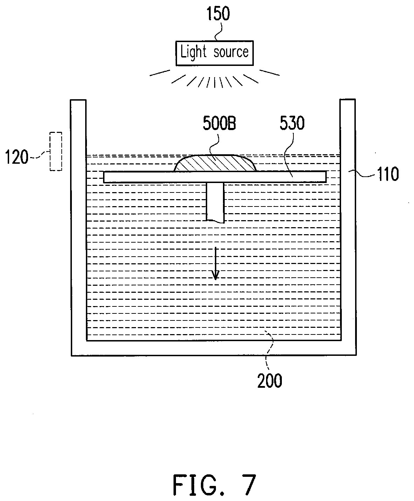

FIG. 7 is a schematic diagram of a 3D printer according to another embodiment of the disclosure. Referring to FIG. 7, the capacitive sensing module 120 is applied to a sink type SL printer, and the light source 150 is disposed above the tank 110, where a forming platform 530 is driven to gradually descend, such that a 3D object 500B is staked layer-by-layer and formed on a forming platform 530. In this case, the control of the liquid forming material 200 is also achieved by disposing the capacitive sensing module 120 beside the tank 110.

Referring to FIG. 1, in the present embodiment, the base 140 substantially has electrical conductivity, and fixing members 142 having electrical conductivity are disposed thereon, and the tank 110 disposed on the base 140 may be fixed on the base 140 through the fixing members 142. Meanwhile, the ground electrode 121B of the capacitive sensing module 120 is electrically connected to the base 140 to achieve a grounding effect. The base 140 is, for example, made of a metal material with electrical conductivity, which not only provides the aforementioned grounding effect, but also improves a structural strength of the tank 110. As shown in FIG. 1, the tank 110 is generally made of a transparent plastic material in order to be pervious to the light produced by the light source 150, so that once the tank 110 is filled with the liquid forming material, the tank 110 is under pressure. Therefore, the tank 110 is further installed on the base 140 to effectively improve the tolerance of the tank 110 for the aforementioned pressure.

Referring to FIG. 5A, the 3D printer of the present embodiment includes three fixing members 142A, 142B and 142C to respectively correspond to the three capacitive sensing modules 120A, 120B and 120C, where the corresponding fixing members 142A, 142B and 142C and the capacitive sensing modules 120A, 120B and 120C have an electrical connection relationship there between (for example, the ground electrode of the capacitive sensing module 142A is connected to the fixing member 142A). In this way, the control module 160 (shown in FIG. 1) may further determine whether the tank 110 is successfully fixed on the base 140 or whether installation of the tank 110 has a skew or axis deviation. Namely, when the tank 110 is completely fixed on the base 140 or the installation of the tank 110 is proper without skew or axis deviation, the reading value of the capacitance of each of the capacitive sensing modules may have a fixed difference, and once the tank 110 cannot be successfully bonded to the fixing members or the installation of the tank 110 has a skew or axis deviation, etc., the aforementioned fixed difference may have abnormity or the reading values of different capacitive sensing modules 120A, 120B and 120C may have a difference.

In summary, in the 3D printer, by configuring at least one capacitive sensing module outside the tank, the electric field produced by the first electrode pair passes through the liquid forming material in the tank to sense a liquid level variation of the liquid forming material, so as to determine whether the liquid forming material before the 3D printing is sufficient, where the first electrode pair faces the liquid forming material, and coves the full liquid level, the low liquid level and the empty liquid level of the liquid forming material in the tank during a using process, so as to ensure that the capacitive sensing module is possible to deal with various variations of the liquid forming material. Meanwhile, by configuring the second electrode pair, the capacitance of the ambient environment is sensed to serve as a sensing reference of the first electrode pair.

Moreover, by configuring a plurality of the capacitive sensing modules around the tank, besides that the single capacitive sensing module may sense the liquid level of the liquid forming material, a flatness of the liquid forming material in the tank may also be determined through a plurality of capacitance reading values of the capacitive sensing modules.

Moreover, by configuring the shielding members at each of the capacitive sensing modules, a shielding effect is provided to the sensing electrode and the ground electrode, so as to effectively avoid the ambient environment interference to decrease the influence of noise.

## Claims

1. A three-dimensional printer (100), comprising:
a tank (110, 330), configured to contain a liquid forming material (200); and
at least one capacitive sensing module (120, 120A, 120B, 120C), configured to sense a liquid level of the liquid forming material (200) in the tank (110, 330), the at least one capacitive sensing module (120, 120A, 120B, 120C) comprising a first electrode pair (121) disposed beside the tank (110, 330), wherein the first electrode pair (121) is used for producing an electric field, and the electric field passes through the liquid forming material (200).

2. The three-dimensional printer as claimed in claim 1, wherein the at least one capacitive sensing module (120, 120A, 120B, 120C) further comprises an insulator (122, 422), the first electrode pair (121) comprises a sensing electrode (121A, 421A) and a ground electrode (121B, 421B), the sensing electrode (121A, 421A) and the ground electrode (121B, 421B) are located at a same side of the insulator (122, 422) and face the liquid forming material (200), and the insulator (122, 422) electrically isolates the sensing electrode (121A, 421A) and the ground electrode (121B, 421B).

3. The three-dimensional printer as claimed in claim 2, wherein the at least one capacitive sensing module (120, 120A, 120B, 120C) further comprises at least one shielding member (123, 423, 423A, 423B, 423C, 423D, 423E) disposed on the insulator (122, 422) and back-facing the first electrode pair (121), the at least one shielding member (123, 423, 423A, 423B, 423C, 423D, 423E) is used for shielding a signal interference of an ambient environment on the first electrode pair (121), and the insulator (122, 422) electrically isolates the at least one shielding member (123, 423, 423A, 423B, 423C, 423D, 423E) and the first electrode pair (121).

4. The three-dimensional printer (100) as claimed in claim 2, wherein the tank is assembled to a conductive base (140), and the conductive base (140) is electrically connected to the ground electrode (121B).

5. The three-dimensional printer (100) as claimed in claim 1, wherein the three-dimensional printer (100) comprises a plurality of capacitive sensing modules (120A, 120B, 120C) and a control module (160), the capacitive sensing modules (120A, 120B, 120C) surround the tank (110), the control module (160) is electrically connected to the capacitive sensing modules (120A, 120B, 120C), and the control module (160) senses a plurality of liquid heights of the forming material (200) in the tank (110, 330) through the capacitive sensing modules (120A, 120B, 120C), so as to determine a liquid level of the liquid forming material (200) in the tank (110, 330).

6. The three-dimensional printer (100) as claimed in claim 5, wherein the capacitive sensing modules (120A, 120B, 120C) surround a center (C2, C3) of the tank (110, 330) in an equal angle configuration, or the capacitive sensing modules (120A, 120B, 120C) are disposed relative to the center (C2, C3) of the tank (110, 330) in an equal distance configuration, or the capacitive sensing modules (120A, 120B, 120C) present a coplanar configuration.

7. The three-dimensional printer (100) as claimed in claim 5, wherein the capacitive sensing modules (120A, 120B, 120C) respectively comprise a ground electrode (121B, 421B), and the three-dimensional printer (100) further comprises a conductive base (140), the tank (110, 330) is assembled to the conductive base (140), and the ground electrodes (121B, 421B) are electrically connected to the conductive base (140).

8. The three-dimensional printer (100) as claimed in claim 1, wherein the at least one capacitive sensing module (120, 120A, 120B, 120C) is kept a distance with the tank (110, 330), or the at least one capacitive sensing module (120, 120A, 120B, 120C) is attached outside the tank (110, 330).

9. The three-dimensional printer (100) as claimed in claim 1, wherein the three-dimensional printer (100) further comprises a control module (160), the at least one capacitive sensing module (120, 120A, 120B, 120C) comprises a second electrode pair (320), the second electrode pair (320) is disposed beside the tank (110) and located above a predetermined liquid level of the liquid forming material (200), the first electrode pair (121) and the second electrode pair (320) are respectively electrically connected to the control module (160), and the second electrode pair (320) is used for sensing a background capacitance of the ambient environment for providing to the control module (160) to calibrate the first electrode pair (121).

10. The three-dimensional printer as claimed in claim 9, wherein the at least one capacitive sensing module (120, 120A, 120B, 120C) further comprises an insulator (122, 422), and the first electrode pair (121) and the second electrode pair (320) are disposed at a same side of the insulator (122, 422) and are electrically isolated from each other by the insulator (122, 422).

11. The three-dimensional printer (100) as claimed in claim 1, wherein the tank (110) has a full liquid level (LV2) and an empty liquid level (LV0), and the first electrode pair (121) corresponds to a liquid level of the liquid forming material (200) and covers the full liquid level (LV2) and the empty liquid level (LV0).

12. The three-dimensional printer as claimed in claim 1, wherein the tank (110) self rotates about a rotation axis (C1).

13. A liquid level sensing method, adapted to a three-dimensional printer (100), wherein the three-dimensional printer (100) comprises a tank (110, 330), a plurality of capacitive sensing modules (120, 120A, 120B, 120C) and a control module (160), the tank (110, 330) is configured to contain a liquid forming material (200), the capacitive sensing modules (120, 120A, 120B, 120C) are disposed around the tank (110, 330), and the control module (160) is electrically connected to each of the capacitive sensing modules (120, 120A, 120B, 120C), the liquid level sensing method comprising:
obtaining reading values of a plurality of the capacitive sensing modules (120, 120A, 120B, 120C) by using the control module (160);
determining whether the reading value of each of the capacitive sensing modules (120, 120A, 120B, 120C) is smaller than a reading value of the liquid forming material (200) at a low liquid level (LV1) of the tank, so as to determine a liquid level of the liquid forming material in the tank (110, 330); and
based on the determination result, performing three-dimensional printing or sending a signal to request for filling the liquid forming material (200) in the tank (110, 330).

14. The liquid level sensing method as claimed in claim 13, further comprising:
determining whether the reading value of each of the capacitive sensing modules (120, 120A, 120B, 120C) is the same; and
again obtaining the reading value of each of the capacitive sensing modules (120, 120A, 120B, 120C) for determination after waiting for a predetermined time when the reading value of each of the capacitive sensing modules (120, 120A, 120B, 120C) is not the same.

15. The liquid level sensing method as claimed in claim 14, wherein when the reading value of each of the capacitive sensing modules (120, 120A, 120B, 120C) is the same and greater than the reading value of the liquid forming material (200) at the low liquid level (LV1) of the tank (110, 330), the three-dimensional printing is performed, and when the reading value of each of the capacitive sensing modules (120, 120A, 120B, 120C) is not the same, and the reading value of each of the capacitive sensing modules (120, 120A, 120B, 120C) is still not the same when the determination is further performed after waiting for the predetermined time, the signal is sent to request filling the liquid forming material (200) in the tank (110, 330).

16. The liquid level sensing method as claimed in claim 13, wherein the capacitive sensing module (120, 120A, 120B, 120C) comprises a first electrode pair (121) for sensing the liquid forming material (200) in the tank (110, 330), and the capacitive sensing module (120, 120A, 120B, 120C) further comprises a second electrode pair (320) disposed beside the tank (110, 330) and electrically connected to the control module (160), the second electrode pair (320) is located above a predetermined liquid level of the liquid forming material (200), and the liquid level sensing method further comprises:
sensing a background capacitance of an ambient environment by using the second electrode pair (320); and
comparing the background capacitance with a sensing capacitance of the liquid forming material (200) obtained by the first electrode pair (121), so as to calibrate the first electrode pair (121).
